# EUROPEAN PATENT APPLICATION

(11) **EP 1 152 381 A1**
(43) Date of publication of application: **07.11.2001**
(21) Application number: 00870091.6
(22) Date of filing: 02.05.2000
(51) Int. Cl.: G07F 19/00

(54) **Method of performing an electronic monetary transaction**

(71) Applicant: Soges-Mars S.A., 5004 Bouge (BE)
(72) Inventor: Couvreur, Yves, 5004 Bouge (BE)
(74) Representative: Gevers, François

(57) **Abstract**

A secure method of performing an electronic monetary transaction is disclosed. In this method, at least a portion of the data sent from a client site to a commercial site is encrypted. The encrypted data is decrypted at a financial institution site. The data is then verified with client parameters stored on the financial institution site and a transaction report is generated based on the results of the verification process.

## Description

The present invention relates to a method of performing an electronic monetary transaction.

Today a lot of transactions take place over the Internet. Commercial websites offer a variety of products, such as books, compact disks, software, hardware or other. This branch of transactions is commonly known as E-commerce. The problem is however that a lot of the transactions give rise to discussions between client and vendor, and even to law suits, due to an unsecure passing of information between client and vendor. It may for example occur that the client's information is passed on to other recipients than the vendor, who is the intended recipient. Furthermore, the unsecure passing of information leads to a lot of Internet criminality, such as people buying goods and/or services from a vendor instead of someone else.

It is therefore necessary to secure the information which is exchanged between the client and the vendor. More particularly, there is a need to prevent a client's credit card number, bank account or any further personal information from becoming known to other recipients than the intended recipient. Therefore, various methods of securing electronic monetary transactions have been proposed in the past. The major component of almost every known method is an encryption key, which is used to translate information from source text to cipher text and back to source text.

There are two known ways to provide an encryption key: a symmetric key system and an asymmetric key system. The symmetric key system uses a private key which is only possessed by those who want to exchange information. This symmetric key is used to encrypt the information as well as to decrypt the information. This symmetric key system is said to have one major disadvantage: the secure distribution of the symmetric key to the intended recipients and only to those recipients.

The asymmetric key system makes use of a pair of keys: a public key and a private key. The public key is freely distributed to anyone who wishes to transfer information to the entity holding the private key. The encryption of information is carried out using the public key, whereas both public key and private key are needed to decrypt the information. This means that only the entity holding the private key is able to decrypt the information, as the private key is not distributed. The disadvantage of the asymmetric key system is that it is based on a mathematically large disparity between decrypting the cipher text with the private key, which is very rapid and simple to do, and decrypting the cipher text without the private key, which theoretically takes a very long time as one has to work through a lot of different possibilities. It is however possible that someone would break the code of the private key. It is also fact that ever-faster computers are developed, such as quantum computers, which could perform the operation of breaking the code of the private key in a fraction of the expected time. As a result, there is no real security in using an asymmetric key system.

A method of performing an electronic monetary transaction is for example known from WO-A-98/59457. This method comprises encrypting and decrypting information using a symmetric key which is only known by both parties in the transaction. The information transferred has the form of a numeric chain. The symmetric key is used to convert each digit of the numeric chain into a different digit. An algorithm is used for encrypting a digit and is predetermined for each digit, so that a reverse formula can afterwards be used for decrypting the digit and converting it back to the initial digit.

However, the method of performing an electronic monetary transaction described in WO-A-98/59457 shows the disadvantage that the recipient or vendor learns all the personal information which the client sends him. Thus, there is the risk that a mala fide vendor of goods and/or services would misuse the client's information to enrich himself at the expense of the client or distribute this information to other parties.

It is the object of the present invention to provide a method of performing an electronic monetary transaction which can be more secure.

This object is achieved in that the method of performing an electronic monetary transaction according to the invention comprises the steps of:
a) establishing a connection between a client site and a commercial site,
b) providing the client with ordering information from the commercial site,
c) creating ordering data on the client site, which ordering data comprises transaction data and a purchase data, the transaction data comprising a first part and a second part, of which the second part comprises at least a first client identifier,
d) encrypting at least the second part of the transaction data of the ordering data on the client site,
e) sending the ordering data from the client site to the commercial site,
f) establishing a connection between the commercial site and a financial institution site,
g) sending the transaction data of the ordering data from the commercial site to the financial institution site,
h) decrypting at least the second part of the transaction data of the ordering data on the financial institution site,
i) verifying the transaction data of the ordering data with client parameters stored on the financial institution site,
j) generating a transaction report on the financial institution site, which transaction report is positive if the transaction data of the ordering data meets the client parameters and negative if the transaction data of the ordering data does not meet the client parameters,
k) sending the transaction report from the financial institution site to the commercial site,
I) in case the transaction report is positive, performing the transaction between the client site and the commercial site.

The method of performing an electronic monetary transaction has the advantage that the second part of the transaction data of the ordering data can be encrypted in such a way, that it is not decryptable on the commercial site. In other words, said second part can be encrypted in such a way that it is only decryptable on the financial institution site. This means that any information which is included in said second part can remain unknown to users of the commercial site and any other users or recipients surveying the transaction between the client site and the commercial site. Thus, the method of the invention can be more secure. The second part of the transaction data of the ordering data comprises a first client identifier, which can for example be a credit card number, an account number or a client number. As said second part is encrypted, the first client identifier can be transmitted to the financial institution site in a secure way. More particularly, users of the commercial site and any other users or recipients surveying the transaction between the client site and the commercial site can be prevented from obtaining the first client identifier. In other words, the first client identifier remains a secret between the client and the financial institution. A further advantage of the method according to the invention is that the vendor on the commercial site is assured of obtaining the amount the client has to pay. As the client identifier is verified on the financial institution before the transaction is carried out, the vendor is assured that the client identifier is valid.

The second part of the transaction data of the ordering data preferably comprises purchase information. This purchase information can for example be a vendor identifier, the amount of money involved in the transaction, a currency, the number of the transaction or any other purchase information. Including the purchase information in the transaction data of the ordering data has the advantage that the purchase information can remain unknown to users of the commercial site and any other users or recipients surveying the transaction between the client site and the commercial site. This also has the advantage that anyone, including the vendor, can be prevented from knowing which purchase information is being verified on the financial site. Optionally, the purchase information may also be included in the first part of the transaction data of the ordering data and passed on to the financial institution site unencrypted, but in this way any other user or recipient could obtain the purchase information.

In the method of performing an electronic monetary transaction according to the invention, the encryption of step d) is preferably carried out using encryption data dedicated to the client and the decryption of step h) is preferably carried out using decryption data dedicated to a second client identifier which is included in the first part of the transaction data of the ordering data. This means that the method according to the invention preferably employs a symmetric key system, which symmetric key is only known on the client site and on the financial institution site. Naturally, the encryption data has to correspond to the decryption data, otherwise the decryption of step h) would lead to a conversion of the transaction data of the ordering data into unreadable or wrong information. In order to enable a correct decryption, the second client identifier is included in the first part of the transaction data of the ordering data, so that the correct decryption data can be selected on the financial institution site. This is necessary because, in a symmetric key system, each different client holds a different key. Using this symmetric key system can enhance the security of the method according to the invention.

The first client identifier is preferably an account identifier, for example a credit card number, a bank account number, a client number or any other account identifier. This account identifier allows simple identification of the client. Furthermore, in the symmetric key system described in the previous paragraph, the account identifier can easily be checked with the second client identifier, so that it can be established whether a third party is misusing the account identifier. This can further enhance the security of the method according to the invention.

In the method according to the invention, steps c) and d) are preferably conducted while the connection between the client site and the commercial site is temporarily interrupted. This can enhance the security of the method according to the invention in that no other users surveying the transaction between the client site and the commercial site can follow the creation of the ordering data and the encryption process.

In the method according to the invention, steps h), I) and j) are preferably conducted while the connection between the financial institution site and the commercial site is temporarily interrupted. This can enhance the security of the method according to the invention in that no other users surveying the transaction between the client site and the commercial site can follow the decryption process, the verification process and the generating of the transaction report.

In an alternative embodiment of the method of performing an electronic monetary transaction according to the invention, the method further comprises the steps of:
- generating a further transaction report on the financial institution site, which further transaction report is positive if the transaction data of the ordering data meets the client parameters and negative if the transaction data of the ordering data does not meet the client parameters,
- sending the further transaction report from the financial institution site to the client site.
This has the advantage that the client can be informed directly by the financial institution site whether or not the transaction will be performed in step I). In case the further transaction report is negative, it preferably includes information which specifies the reason due to which it is negative. Furthermore, a client can be notified when a third party tries to misuse the client's account identifier.

The present invention also relates to a system for performing an electronic monetary transaction, the system comprising a financial institution site with:
- receiving means for receiving at least a portion of ordering data which is sent from a commercial site, said portion of the ordering data comprising a first part and a second part, the second part being encrypted on a client site,
- decrypting means connected to said receiving means for decrypting the second part of the received portion of the ordering data,
- storage means for storing client parameters,
- verifying means connected to said decrypting means, said storage means and said receiving means for verifying the received portion of the ordering data with the client parameters stored by the storage means, the verifying means being provided to generate a first, respectively a second verification parameter upon establishing that the received portion meets, respectively does not meet the client parameters,
- report generating means connected to said verifying means for generating a positive, respectively a negative transaction report upon receiving the first, respectively the second verification parameter from the verifying means,
- transmission means connected to said report generating means for transmitting the transaction report to the commercial site.

In preferred embodiment of the system for performing an electronic monetary transaction according to the invention, the system comprises further report generating means connected to said verifying means for generating a positive, respectively a negative further transaction report upon receiving the first, respectively the second verification parameter from the verifying means; and further transmission means connected to said further report generating means for transmitting the further transaction report to the client site.

The invention will be further elucidated by means of the following description and the appended figures of a preferred embodiment of the invention.

Figure 1 shows a schematic summary of the method of performing an electronic monetary transaction according to the invention.

Figure 2 shows a flowchart for performing an electronic monetary transaction with the method of the invention.

Figure 3 shows a system for performing an electronic monetary transaction with the method of the invention.

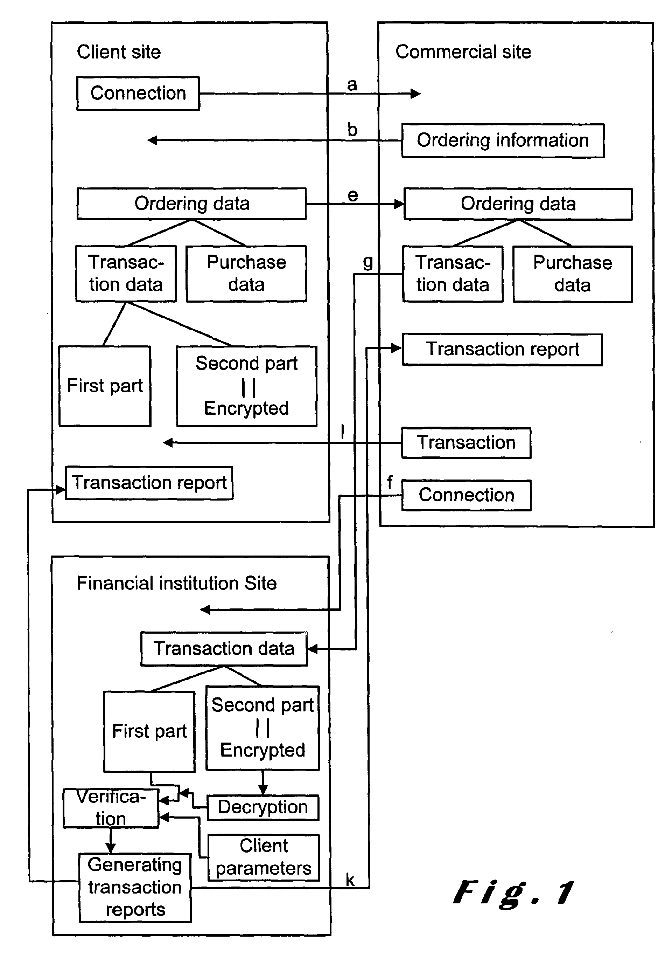

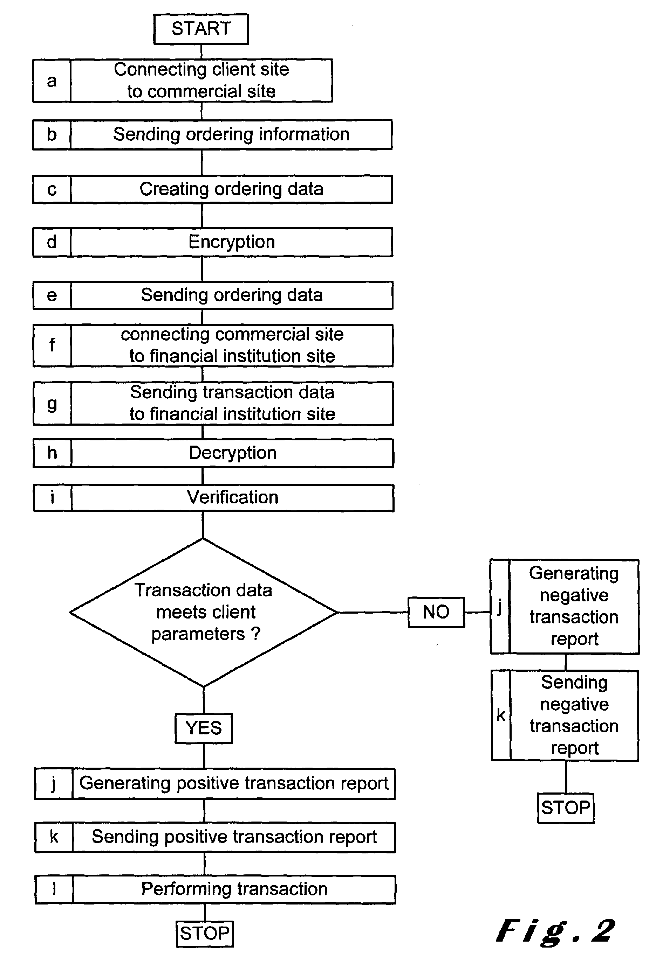

The method of performing an electronic monetary transaction according to the invention is summarised schematically in figure 1 and shown in flowchart in figure 2. This method, which is particularly suitable for Internet transactions, involves a client site, a commercial site and a financial institution site. In step a) a connection is established between the client site and the commercial site. Then, in step b), ordering information is sent from the commercial site to the client site. This ordering information can for example comprise the goods and/or services the vendor offers for sale, the price of these goods and/or services, or any other ordering information. On the basis of this ordering information, the client decides which goods and/or services he wants to purchase. In the next step (step c) ordering data is created on the client site. This ordering data comprises transaction data intended to be sent to the financial institution site and a purchase data intended to be sent to the commercial site. The transaction data of the ordering data comprises a first part and a second part. Said second part comprises at least a first client identifier, by means of which the client can be identified on the financial institution site, and preferably also purchase information, by means of which it can be determined on the financial institution site whether or not the transaction is to be allowed. This purchase information may however also be included in the first part of the transaction data of the ordering data. The purchase data of the ordering data preferably comprises further purchase information, by means of which the vendor on the commercial site can determine which goods and/or services the client wants to purchase. In the following step (step d), the second part of the transaction data of the ordering data is encrypted. This encryption is done with the purpose of securing the information included in said second part from the vendor and any other users surveying the transaction between the client site and the commercial site. Thereto, the encryption is carried out in such a way that said second part in not decryptable on the commercial site, only on the financial institution site. After the encryption of said second part, the ordering data is sent to the commercial site (step e). Next, a connection is established between the commercial site and the financial institution site (step f) and the transaction data of the ordering data is sent from the commercial site to the financial institution site (step g). On the financial institution site, the second part of the transaction data of the ordering data is decrypted (step h). After this decryption is completed, the information included in said second part is readable on the financial institution site. The information included in the second part, and also the information included in the first part of the transaction data of the ordering data, is then verified with client parameters, which are stored in a database on the financial institution site (step i). Following this verification is the generating of a transaction report (step j), which transaction report is positive if the transaction data of the ordering data meets the client parameters and negative if the transaction data of the ordering data does not meet the client parameters. Finally, the transaction report is sent to the commercial site (step k) and in case the transaction report is positive, the transaction is performed (step I).

In the method represented in figure 1, the second part of the transaction data of the ordering data comprises a first client identifier. This first client identifier can for example be a credit card number, an account number or a client number. As the second part is encrypted, the first client identifier can be transmitted to the financial institution in a secure way, without it becoming known to any other users. In this way, misuse by any third party which would obtain the first client identifier can be avoided, in that the first client identifier can only be obtained by a third party in encrypted form. Furthermore, sending the first client identifier to the financial institution site has the advantage that also the vendor is provided with security for performing electronic monetary transactions. This security is obtained by verifying the first client identifier with the client parameters on the financial institution site, which makes it possible to prevent transactions from being performed if the first client identifier does not meet the client parameters on the financial institution site.

The purchase information is preferably also included in the second part of the transaction data of the ordering data. In this way, the purchase information can be prevented from becoming known to other users. The purchase information can for example be a vendor identifier, the amount of money involved in the transaction, a currency, the number of the transaction, or any other purchase information. Optionally, the purchase information may be included in the first part of the transaction data of the ordering data. By means of the purchase information, it can be determined on the financial institution site whether or not the transaction is to be allowed. For this purpose, the purchase information is verified with the client parameters stored on the financial institution site. The client parameters can for example comprise a maximum amount of money which the client wishes to spend in one transaction or in a certain time period (e.g. max. 100 $ per transaction or per month), a maximum amount of transactions which the client wishes to perform in a certain time period (e.g. max. 5 transactions per month), which currencies the client wishes to allow payments in, whether or not the client wishes to allow internet transactions, or any other parameters the client wishes to specify. By comparing these client parameters to the purchase information, the financial institution can verify whether the transaction is within the limits specified by the client and prevent it from being performed if this is not the case. If for example the amount of money involved in the transaction exceeds the amount of money per transaction which is specified in the client parameters, the transaction report generated on the financial institution site would be negative. As a result, the vendor on the commercial site would receive a negative transaction report from the financial institution site and would not perform the transaction. In this way, a client can be prevented from spending more money than he wishes to spend and, furthermore, a vendor can be ensured that he will obtain the money for selling his goods and/or services. Thus, the method of performing an electronic monetary transaction according to the invention enhances the security for both client and vendor in many ways.

If the purchase information includes a vendor identifier, the financial institution can verify whether the vendor is bona fide or mala fide - without the vendor knowing of it - and generate the corresponding transaction report accordingly (positive if the vendor is bona fide, negative if the vendor is mala fide). In this way, the financial institution can prevent clients from purchasing goods and/or services from mala fide vendors. This means that transactions could be prevented which would lead to clients paying money for goods and/or services without ever receiving them. If such a transaction would occur, the client involved simply would have to notify the financial institution of it, and the financial institution would be able to prevent any further transactions between that particular vendor and any other clients. This would of course imply that a database of possible mala fide vendors has to be created on the financial institution site.

Optionally, the method of performing an electronic monetary transaction represented in figure 1 may also comprise the steps of:
- generating a further transaction report on the financial institution site, which further transaction report is positive if the transaction data of the ordering data meets the client parameters and negative if the transaction data of the ordering data does not meet the client parameters,
- sending the further transaction report from the financial institution site to the client site.
Including these further steps has the advantage that the client is notified directly by the financial institution whether or not the transaction is performed. In case the further transaction report is negative, it preferably includes information which specifies the reason due to which it is negative. This means that the further transaction report specifies which client parameters are not met by the transaction data of the ordering data. The further transaction report may also notify a client when a third party tries to misuse the client's account.

The encryption in the method according to the invention can be carried out in many different ways. Also, the amount of information which is encrypted or not may vary.
- A first possibility is that only the second part of the transaction data of the ordering data is encrypted. This second part comprises the first client identifier and, as already mentioned, possibly also the purchase information. It can be encrypted using an asymmetric key system, in which the client encrypts the second part with a public key, which is available to any client, and the financial institution decrypts the second part with a symmetric key, which is only known to the financial institution. Alternatively, the encryption of the second part can be carried out using a symmetric key system, in which both encryption and decryption are carried out using a symmetric key which is only known to the respective client and to the financial institution. In this latter case, the first part of the transaction data of the ordering data comprises a second client identifier, by means of which the client can be identified on the financial institution site, so that it can be determined which symmetric key should be used for decrypting the second part.
- A second possibility is that also the first part of the transaction data is encrypted. If an asymmetric key system is used for encrypting the second part, the first part can be encrypted along with the second part, using the same asymmetric key system. On the other hand, if the second part is encrypted using a symmetric key system, the first part should be encrypted separately using an asymmetric key system. Otherwise, the second client identifier which is included in the first part would not be available on the financial institution site, so that it could not be determined which symmetric key has to be used for decrypting the second part.
- A third possibility is that the purchase data of the ordering data is encrypted. As this purchase data contains information which is intended for the commercial site, the purchase data is encrypted on the client site and decrypted on the commercial site. This can be carried out using an asymmetric key system, in which the encryption on the client site is done with a public key, which is provided by the commercial site to any client, and the decryption on the commercial site is done with a symmetric key, which is only known on the commercial site. Alternatively, both encryption on the client site and decryption on the financial institution site can be carried out using a symmetric key, which is then only known to the respective client and to the commercial site. This would of course imply that a third client identifier is sent along with the purchase data of the ordering data, which third client identifier is intended for the commercial site, so that the decryption on the commercial site can be carried out using the symmetric key dedicated to the respective client.
- Further possibilities are to encrypt the transaction report, which is sent from the financial institution site to the commercial site, and (if present) the further transaction report, which is sent from the financial institution site to the client site. Again, these encryptions can be carried out using either a symmetric or an asymmetric key system.

In the following, the method represented in figure 2 will be described in more detail by means of an example. In this example, the encryption on the client site and the decryption on the financial institution site are carried out using a symmetric key system. For this purpose, the financial institution provides each client with an encryption data file, which can for example be sent by mail on a hardware medium such as a floppy disk, a CD ROM, a chip card, .... The encryption data file is different for each client. On the financial institution site, a corresponding decryption data file is stored for each client, along with a client number and client parameters for the respective client. By means of the client number, the respective client can be identified and the decryption data file dedicated to the respective client can be selected for the encryption on the financial institution site.

In step a of figure 2, the client site is connected to the commercial site, for example over the Internet. In step b, ordering information is sent from the commercial site to the client site. This means that the client is provided with information about the goods and/or services which are sold on the commercial site and their prices. The next step c is the creating of the ordering data on the client site. In this step c, the client first selects the goods and/or services he wishes to buy and calculates the total price of these goods and/or services. Then he incorporates all the information necessary for performing the transaction in the ordering data, which can be done by means of a software programme which is also provided to the client by the financial institution. This software programme may be password-protected, for example by means of a personal identification number (PIN), to enhance security. The ordering data created in step c of figure 2 comprises the following information:
- a first client identifier, for example a credit card number or an account number;
- purchase information, such as the total price of the goods and/or services the client wishes to purchase, the number of the transaction, the currency in which the payment will be done and optionally also a vendor identifier;
- a second client identifier, for example a client number of 20 characters which is built up in the following way: 2 characters for the client's continent, 3 characters for the client's country, 5 characters for the client's local financial institution, 6 characters for the client's computer number and 6 characters for the client's local number;
- further purchase information, such as the goods and/or services and the amount the client wishes to purchase;
- address information, such as the name and the address of the client.
The second client identifier will serve to determine which decryption data file is to be used on the financial institution site. The purchase information will serve to determine whether or not the transaction is to be allowed after verification with the client parameters stored on the financial site. The further purchase information and the address information are necessary data for the vendor on the commercial site, as he needs this information to be able to perform the transaction.

The information in the ordering data can be structured in the following way: transaction data intended to be sent to the financial institution site, with a second part to be encrypted and a first part to remain unencrypted (or to be encrypted with an asymmetric key system), and a purchase data intended to be sent to the commercial site (either encrypted or unencrypted). The second part of the transaction data of the ordering data, which is to be encrypted in step d, comprises at least the first client identifier and preferably, to enhance the security of the transaction, also the purchase information. The first part of the transaction data of the ordering data includes the second client identifier and, if not included in the second part, the purchase information. The further purchase information and the address information are included in the purchase data of the ordering data.

The following step d is the encryption of at least the second part of the transaction data of the ordering data. To enhance the security of the transaction, this step d is preferably carried out while the client site is turned "off line", i.e. while the connection between the client site and the commercial site is temporarily interrupted. For reasons of simplicity, said second part is in this example limited to a number of four digits and the first part of the transaction data and the purchase data of the ordering data remain unencrypted. Considering a monetary transaction, only 11 characters are involved in the transaction: "0", "1", "2", "3", "4", "5", "6", "7", "8", "9" and "," (this last character serves as a separating character between numeral digits or as a decimal comma). The encryption data file dedicated to the client, which is used for encrypting said second part of the transaction data of the ordering data, comprises a plurality of lines, for example 10,000 lines, the top line containing the 11 characters mentioned above in the "natural" order (i.e. in climbing order) and each subsequent line containing the 11 characters mentioned above in a random order. The encryption data file thus corresponds to the following table:

| **top line** | **0** | **1** | **2** | **3** | **4** | **5** | **6** | **7** | **8** | **9** | **,** |
|---|---|---|---|---|---|---|---|---|---|---|---|
| 1^{st} line | , | 0 | 9 | 7 | 5 | 6 | 2 | 3 | 4 | 1 | 8 |
| 2^{nd} line | 0 | 8 | 7 | 5 | 6 | 2 | 4 | 3 | 9 | , | 1 |
| 3^{rd} line | 3 | 4 | 8 | 7 | 9 | 6 | 0 | 1 | , | 5 | 2 |
| 4^{th} line | 0 | , | 7 | 9 | 8 | 5 | 6 | 4 | 2 | 3 | 1 |
| ... | | | | | | | | | | | |

Using this encryption data file, the encryption is carried out as follows. The numeral digits of the second part of the transaction data of the ordering data are placed in a vertical column, with the first digit in the first line, the second digit in the second line, and so on. Each original numeral digit is subsequently replaced by the digit in the top line which is located in the same spot as the respective original digit in the respective line. The four digit number "3455" is thus converted into the resulting number "7695":

| **top line** | | **0** | **1** | **2** | **3** | **4** | **5** | **6** | **7** | **8** | **9** | **,** |
|---|---|---|---|---|---|---|---|---|---|---|---|---|
| 1^{st} line | 3 | , | 0 | 9 | 7 | 5 | 6 | 2 | 3 | 4 | 1 | 8 |
| 2^{nd} line | 4 | 0 | 8 | 7 | 5 | 6 | 2 | 4 | 3 | 9 | , | 1 |
| 3^{rd} line | 5 | 3 | 4 | 8 | 7 | 9 | 6 | 0 | 1 | , | 5 | 2 |
| 4^{th} line | 5 | 0 | , | 7 | 9 | 8 | 5 | 6 | 4 | 2 | 3 | 1 |
| ... | | | | | | | | | | | | |

From this example, it is clear that decrypting the resulting number is impossible without having the corresponding decryption data file dedicated to the client. One could simply guess the original digits. Even if two original digits are the same, the digits in the resulting number are mostly different, which is clear from the 3^{rd} and 4^{th} digits of the example: the "5" in the 3^{rd} line returns a "9", whereas the "5" in the 4^{th} line returns a "5".

To enhance security, each line of the decryption data file is preferably used only once. This implies that, if a first encryption starts with line n as the 1^{st} line and uses m lines, the next encryption will start from line n + m + 1. In the example above with a four digit number, the next encryption will thus start from the fifth line. As a result, the final line of the encryption data file will be reached at a certain point in time. It can then be made possible to either restart from the first line or, more securely, to provide the client with a new encryption data file.

After the encryption the ordering data is sent from the client site to the commercial site (step e). There it is divided into transaction data and purchase data, after which a connection is established between the commercial site and the financial institution site (step f) and the transaction data is sent on to the financial institution site (step g). The three steps (h, i and j) following step g are preferably conducted while the financial site is "off line", i.e. while the connection between the financial institution site and the commercial site is temporarily interrupted.

Step h is the decryption of the second part of the transaction data of the ordering data. For this purpose, first the correct decryption data file is selected by matching the second client identifier, which is included in the first part of the transaction data, to the client number stored on the financial institution site. Then the decryption is carried out by reversing the encryption process which has been described above, i.e. the resulting number "7695" is converted back to the original number "3455".

In step i, the purchase information, which is either included in the second part or in the first part of the transaction data of the ordering data, is verified with the client parameters stored on the financial institution site. These client parameters can for example comprise a maximum amount of money which the client wishes to spend in one transaction or in a certain time period (e.g. max. 100 $ per transaction or per month), a maximum amount of transactions which the client wishes to perform in a certain time period (e.g. max. 5 transactions per month), which currencies the client wishes to allow payments in, whether or not the client wishes to allow internet transactions, or any other parameters the client wishes to specify. So by means of the purchase information it is verified whether the amount to be paid does not exceed the amounts per transaction or per month specified by the client, whether the transaction number does not exceed the maximum amount of transactions per time period, whether the currency is allowed by the client and whether the transaction should be prevented if it is an internet transaction. This verification process generates a verification parameter, either "YES" or "NO". In case of a "YES", a positive transaction report is generated and in case of a "NO", a negative transaction report is generated in the following step j.

Whether positive or negative, the transaction report is in any case sent to the commercial site in step k. Finally, if the transaction report is positive, the transaction is performed in step I.

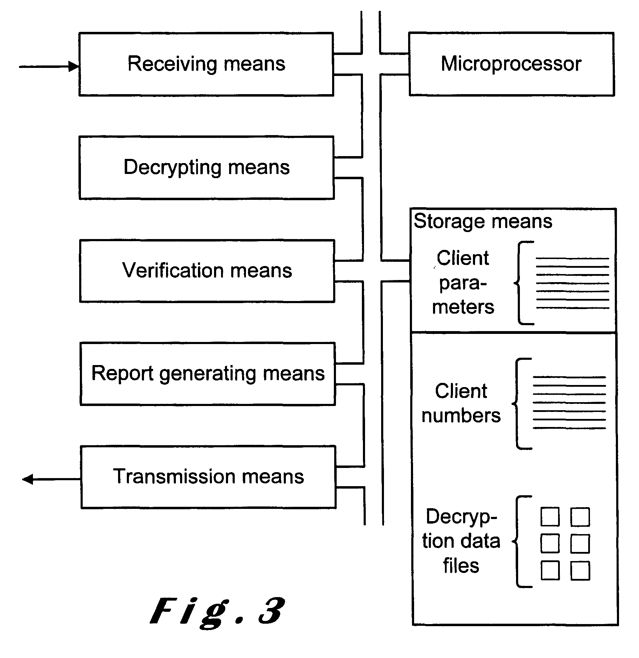

A system for performing an electronic monetary transaction is shown in figure 3. This system comprises a financial institution site with the following components:
- a microprocessor,
- receiving means for receiving at least a portion of ordering data which is sent from a commercial site, said portion of the ordering data comprising a first part and a second part, the second part being encrypted on a client site,
- decrypting means connected to said receiving means for decrypting the second part of the received portion of the ordering data,
- storage means for storing sets of client parameters, client numbers and decryption data files, each set of client parameters and each decryption data file being dedicated to a different client number,
- verifying means connected to said decrypting means, said storage means and said receiving means for verifying the received portion of the ordering data with the client parameters stored by the storage means, the verifying means being provided to generate a first, respectively a second verification parameter upon establishing that the received portion meets, respectively does not meet the client parameters,
- report generating means connected to said verifying means for generating a positive, respectively a negative transaction report upon receiving the first, respectively the second verification parameter from the verifying means,
- transmission means connected to said report generating means for transmitting the transaction report to the commercial site.
With the system of figure 3, the electronic monetary transaction is performed as follows. First, at least a portion of ordering data is received from a commercial site. This portion of the ordering data comprises a first part and a second part. The second part, which has been encrypted on a client site, comprises at least a first client identifier and preferably also purchase information. The first client identifier is for example a credit card number or a client account number. The first part comprises the purchase information if this is not included in the second part.

The second part of the received portion of the ordering data is passed on from the receiving means to the decrypting means. In case the encryption on the client site has been carried out using an asymmetric key system, the decryption is carried out using a symmetric key which is stored in the storage means and which is only known on the financial institution site. On the other hand, if the encryption on the client site is carried out using a symmetric key system, the decryption is carried out using a symmetric key dedicated to said client site. In this latter case, the first part of the received portion of the ordering data comprises a second client identifier, which preferably is a client number of 20 characters, such as has been described above. The decryption is then carried out using a decryption data file dedicated to the second client identifier, which is stored in the storage means.

After the decryption is completed, the second part of the received potion of the ordering data is passed on from the decrypting means to the verifying means. If the purchase information is included in the first part of the received portion of the ordering data, this first part is passed on from the receiving means to the verifying means. The verifying means first check the validity of the first client identifier, which is included in the (now decrypted) second part. This validity check comprises for example a determining whether the first client identifier is dedicated to a client number stored in the storage means and whether this stored client number matches the second client identifier included in the first part of the received portion of the ordering data. The validity check can further comprise a determining whether the first client identifier is still valid for performing monetary transactions (for example whether the client's credit card has expired or not).

If the validity check leads to a positive result, the verifying means proceed with comparing the purchase information, which is either included in the (now decrypted) second part or in the first part of the received portion of the ordering data, to the client parameters stored in the storage means. In comparing the purchase information with the client parameters, the verifying means can for example determine whether the amount of money involved in the transaction does not exceed the maximum amount per transaction or per time period specified by the client, whether the currency of the transaction is allowed by the client, whether the vendor is known to be a bona fide vendor, or whether the client allows Internet transactions. If all these conditions specified in the client parameters are met by the purchase information, the verifying means generate a first verification parameter (the "YES" in figure 2). If not, the verifying means generate a second verification parameter (the "NO" in figure 2).

If the validity check of the first client identifier leads to a negative result, the verifying means directly generate the second transaction parameter (the "NO" in figure 2).

Subsequent to the verification process, the first or second verification parameter is passed on to the report generating means. These report generating means generate a positive, respectively a negative transaction report upon receiving the first, respectively the second verification parameter. In case of a negative transaction report, this preferably specifies the reason for stopping the transaction. This reason can be that the first client identifier is not valid, i.e. that the client's credit card has expired or that a third party misuses the client's credit card number, or that one or more of the client parameters are not met by the purchase information.

Finally, the transaction report is passed on to the transmission means, which send the transaction report to the commercial site.

The connection between the commercial site and the financial institution site is preferably performed in real time, i.e. through the Internet. It is however also conceivable to establish the connection and transmitting data between the commercial site and the financial institution site through e-mail.

The same or different report generating means are preferably provided for generating a further transaction report to the client site. This further transaction report may be the same or a different report than the report sent to the commercial site. Similarly, the transmission means may be identical or different.

## Claims

1. A method of performing an electronic monetary transaction comprising the steps of:
a) establishing a connection between a client site and a commercial site,
b) providing the client with ordering information from the commercial site,
c) creating ordering data on the client site, which ordering data comprises transaction data and a purchase data, the transaction data comprising a first part and a second part, of which the second part comprises at least a first client identifier,
d) encrypting at least the second part of the transaction data of the ordering data on the client site,
e) sending the ordering data from the client site to the commercial site,
f) establishing a connection between the commercial site and a financial institution site,
g) sending the transaction data of the ordering data from the commercial site to the financial institution site,
h) decrypting at least the second part of the transaction data of the ordering data on the financial institution site,
i) verifying the transaction data of the ordering data with client parameters stored on the financial institution site,
j) generating a transaction report on the financial institution site, which transaction report is positive if the transaction data of the ordering data meets the client parameters and negative if the transaction data of the ordering data does not meet the client parameters,
k) sending the transaction report from the financial institution site to the commercial site,
I) in case the transaction report is positive, performing the transaction between the client site and the commercial site.

2. Method of performing an electronic monetary transaction according to claim 1, **characterised in that** the second part of the transaction data of the ordering data comprises purchase information.

3. Method of performing an electronic monetary transaction according to claim 1 or 2, **characterised in that** the encryption of step d) is carried out using encryption data dedicated to the client and that the decryption of step h) is carried out using decryption data dedicated to a second client identifier which is included in the first part of the transaction data of the ordering data, the encryption data corresponding to the decryption data.

4. Method of performing an electronic monetary transaction according to any one of claims 1-3, **characterised in that** the first client identifier is an account identifier.

5. Method of performing an electronic monetary transaction according to any one of claims 1-4, **characterised in that** steps c) and d) are conducted while the connection between the client site and the commercial site is temporarily interrupted.

6. Method of performing an electronic monetary transaction according to any one of claims 1-5, **characterised in that** steps h), i) and j) are conducted while the connection between the financial institution site and the commercial site is temporarily interrupted.

7. Method of performing an electronic monetary transaction according to any one of claims 1-6, **characterised in that** the method further comprises the steps of:
- generating a further transaction report on the financial institution site, which further transaction report is positive if the transaction data of the ordering data meets the client parameters and negative if the transaction data of the ordering data does not meet the client parameters,
- sending the further transaction report from the financial institution site to the client site.

8. System for performing an electronic monetary transaction, the system comprising a financial institution site with:
- receiving means for receiving at least a portion of ordering data which is sent from a commercial site, said portion of the ordering data comprising a first part and a second part, the second part being encrypted on a client site,
- decrypting means connected to said receiving means for decrypting the second part of the received portion of the ordering data,
- storage means for storing client parameters,
- verifying means connected to said decrypting means, said storage means and said receiving means for verifying the received portion of the ordering data with the client parameters stored by the storage means, the verifying means being provided to generate a first, respectively a second verification parameter upon establishing that the received portion meets, respectively does not meet the client parameters,
- report generating means connected to said verifying means for generating a positive, respectively a negative transaction report upon receiving the first, respectively the second verification parameter from the verifying means,
- transmission means connected to said report generating means for transmitting the transaction report to the commercial site.

9. System according to claim 8, **characterised in that** the system comprises further report generating means connected to said verifying means for generating a positive, respectively a negative further transaction report upon receiving the first, respectively the second verification parameter from the verifying means; and further transmission means connected to said further report generating means for transmitting the further transaction report to the client site.
